Europäisches Patentamt

**European Patent Office**

**Office européen des brevets**

(11) Publication number: **0 143 470**
**A2**

(12) # EUROPEAN PATENT APPLICATION

(21) Application number: **84114526.1**

(22) Date of filing: **30.11.84**

(51) Int. Cl.⁴: **G 11 B 9/08**

(30) Priority: **30.11.83 JP 224071/83**

(43) Date of publication of application: **05.06.85**
**Bulletin 85/23**

(84) Designated Contracting States: **DE FR GB**

(71) Applicant: **Kabushiki Kaisha Toshiba, 72, Horikawa-cho Saiwai-ku, Kawasaki-shi Kanagawa-ken 210 (JP)**

(72) Inventor: **Matsui, Toshikazu, 3-12-10, Minamidai Nakano-ku, Tokyo (JP)**

(74) Representative: **Lehn, Werner, Dipl.-Ing. et al, Hoffmann, Eitle & Partner Patentanwälte Arabellastrasse 4 (Sternhaus), D-8000 München 81 (DE)**

(54) **Information recording medium.**

(57) An information recording medium (10) according to the present invention permits recording with high density, reproducing, and erasing using electric charges (18). In particular, a second insulator film (13) thereof is formed as a multi-layer structure with different electric current density and charge trapping density for each layer (13a, 13b). With this recording medium, satisfactory characteristics for recording, reproducing, and erasing can be obtained using films (13) of smaller thickness than for the case of single-layer structure, making it possible to extend the life of the electrode (15) used for recording and erasing through reduction in the voltages required for recording and erasing.

0143470

# INFORMATION RECORDING MEDIUM

The present invention relates to an information recording medium obtained by forming an insulating film over a semiconductor base in order to record information signals in the form of accumulated electric charges.

As recording media of disk type, there are known in the past magnetic disks, optical disks, and disks of electrostatic capacity type. As a special feature of magnetic recording system, a magnetic disk makes it possible to carry out all the operations of recording, reproducing, and erasing electromagnetically, and moreover, has an advantage of permitting a playback immediately after recording. However, it has a drawback that the recording capacity is small due to the requirement for a track width which is wide enough.

In contrast, an optical disk permits to make the track width to be small because of the use of the laser beam for recording and reproducing. This makes it possible to have recordings with extremely high density. However, the optical disk has a drawback that it essentially requires several chemical and physical proccesses after recording, for obtaining a reproducible disk. Furthermore, this system also has a weakness in that it is not possible at present to carry out the operations of erasing and re-recording, due to the recording of irreversible type.

In addition, there is known in the past a device for recording and reproducing information by using a magnetic medium with a construction such that a thin oxide film is formed as a first insulator film on a semi-conductor base, and a second insulator film, for example a nitride film, with the function of accumulating electric charges is formed on top of the first film. Recording of an information signal is made by accumulating electric charges in the nitride film, via a recording electrode which moves relative over the recording medium, by applying recording voltage to the recording electrode in response to the information signal. Reproducing of the recorded signal is carried out by detecting, via a reproducing electrode which moves relative to the surface of the recording medium, the variations in the electrostatic capacity due to the depletion layer created in the semiconductor base corresponding to the accumulated charge in the nitride film. Similar to the optical disk, this system permits an extremely high density recording. Moreover, the system possesses an excellent feature of easy erasing and re-recording.

However, in this system, it is necessary to give a sufficiently large thickness to the nitride film in order to improve the recording and erasing characteristics. In that case, the voltage required for recording and erasing becomes high, with a considerable current flow, so that the life of the electrode is reduced due to occurrence of discharges and the like. However, if the nitride film is made thin in order to lower the recording and erasing voltages, the recording, reproducing, and erasing characteristics of the nitride film degenerate due to deterioration in the quality of the nitride film. On the other hand, if the quality of the nitride film is improved, then the trapping density of electric charges decreases. This make it difficult to accumulate sufficient amount of electric charges. Thus, an improved quality of the nitride film does not necessarily lead to the expectation of an improvement in the recording, reproducing, and erasing characteristics.

An object of the present invention is to provide an information recording medium which allows improvement of the life of electrodes used for recording and erasing.

Another object of the present invention is to provide an information recording medium which is capable of reducing the voltages needed for recording and erasing, and also to obtain satisfactory recording and reproducing characteristics.

In order to accomplish the above objects, the information recording medium in accordance with the present invention has a multi-layer structure in which on a semiconductor base, there is formed, through a first insulator film, a second insulator film with the function of accumulating electric charges. The second film consists of two layers of films with unequal film properties due to the differences in the conditions for their manufacture, through made of the same material. Therefore the layer of a first kind has larger electric current density and electric charge trapping density than the layer of a second kind. Relative to the layer of the first kind, the layer of the second kind is arranged on the opposite side of the first insulator film.

These and other objects, features, and advantages of the present invention will be more apparent from the following description of preferred embodiments taken in conjunction with the accompanying drawings,in which:

Fig.1 is a simplified block diagram for the information recording medium and the recording device embodying the present invention;

Fig.2a is a simplified diagram for illustrating the recording mechanism of a prior art information recording medium;

Fig.2b is a simplified diagram for illustrating the recording mechanism of the information recording medium embodying the present invention;

Fig.3 is a diagram of the information recording medium and the reproducing device embodying the present invention; and

Fig.4 is a simplified diagram for another embodiment of the information recording medium in accordance with the present invention.

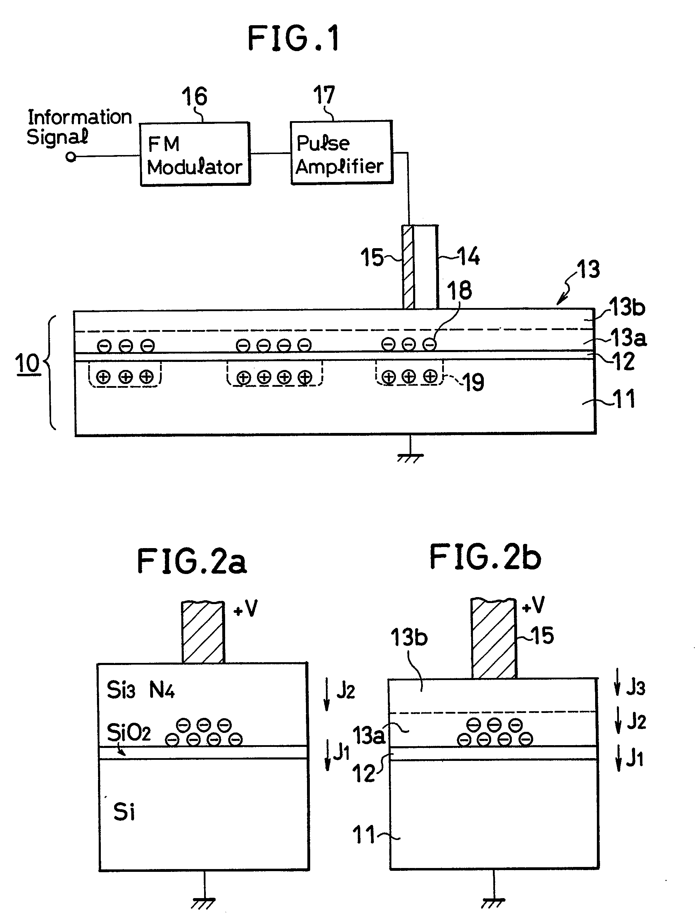

Referring now to Fig.1, there is illustrated a recording device utilizing the information recording medium embodying the present invention.

The information recording medium 10 has a semiconductor base 11, such as n-type or p-type silicon monocrystal or polycrystal. On the semiconductor base 10, there is formed a silicon oxide ($SiO_2$) film with thickness of about 20 Å, for example, by thermal oxidation, as a first insulator film 12. On the silicon oxide film there is formed, for example, a silicon nitride ($Si_3N_4$) film by CVD or like method, as a second insulator film 13 having the function of accumulating electric charges.

Now, in the case of employing CVD method, the silicon nitride film is formed in a high temperature furnace by the chemical reaction of ammonium ($NH_3$) and silane ($SiH_4$). It has been known that the properties of the silicon nitride films vary markedly depending upon the mixing ratio of ammonia and silane and the temperature of the furnace in which the chemical reaction takes place. For example, the larger the mixing ratio of ammonia and silane (the larger the amount of ammonia), the better the quality of the silicon nitride film produced. Thus, the density of electric current which flows under application of the same voltage is smaller for larger mixing ratio, ammonia / silane, and the trapping density of electric charge is also smaller for larger mixing ratio, ammonia / silane.

The second insulator film 13 is formed as a two-layer structure of a first kind of layer and a second kind of layer with different thicknesses. The two layer are made under differenct manufacturing conditions though both are silicon nitride films of same material. The first layer 13a is composed of the first kind of silicon nitride which is formed under the condition of smaller value of the mixing ratio ammonia/silane, while the

0143470

second layer 13b is composed of the second kind of silicon nitride which is formed under the condition of larger value of the mixing ratio ammonia/silane. However, the thickness of both layers 13a and 13b is of the order of several hundred $\overset{.}{A}$.

It is noted for achieving different film qualities for the two layers 13a and 13b, either changing the temperature at which the chemical reaction takes place or varying both the temperature and the mixing ratio ammonia/silane is possible. Further more, the second insulator film 13 need not be of silicon nitride, and similar information recording medium can be constructed by utilizing alumina ($Al_2O_3$), tantalum oxide ($Ta_2O_5$), or titanium oxide ($TiO_2$).

In recording operation, a recording electrode 15 which is thinly attached to a side of a needle-shaped electrode supporter 14, like a sapphire stylus, is touched on the surface of the recroding medium 10. A motion of the recording electrode 15 relative to the recording medium 10 is accomplished by rotating the recording medium 10. At the same time, the information signal to be recorded (for example, a video signal) is converted to an FM modulated wave by an FM modulator 16. This signal is changed to a pulse-form signal of the order of several tens of volts by means of a pulse amplifier 17 to be applied to the recording electrode 15. Now, electric charges from the semiconductor base 11 penetrate through the first insulator film 12 by tunneling effect, and are trapped mainly in the first layer 13a of the second insulator film 13. Of the two kinds of layers of the second insulator film 13, the first layer 13a has larger charge trapping density due to the differences in the manufacturing conditions so that the electric charges are accumulated primarily in the first layer 13a, with almost no accumulation of charges in the second layer. In this manner, the information signal is recorded in the form of accumulated charges 18 in the first layer of the second insulator film 13. At the same time, there is created a depletion layer 19 in the semiconductor base 11 due to the accumulated charges 18.

Next, a more detailed description will be given of the recording mechanism in this embodiment of the present invention.

First, in order to facilitate the understanding of the present invention, the mechanism for the prior art recording medium will be illustrated. Figure 2a shows the recording situation for the prior art recording medium which is created by forming, on a semiconductor base (N-type Si), a silicon oxide ($SiO_2$) film as the first insulator film and a silicon nitride ($Si_3N_4$) film with a single layer structure, that is, with uniform film quality, as the second insulator film. In recording operation, a positive voltage +V is applied to the electrode, which creates electric currents J1 and J2 in the oxide film and the nitride film, respectively, as shown in Fig.2a. The mechanism is such that the difference between the electric current J1 in the oxide film and the electric current J2 in the nitride film is accumulated in the nitride film as the accumulated charges. Here, for J1>J2, the charges that are accumulated are electrons, while for J1<J2, charges accumulated are holes. As the thickness of the nitride film is increased, the recording characteristics are improved, and erasing becomes relatively easy also. However, the voltage required for recording and erasing becomes larges,so that the life of the electrode is shortened due to occurrence of the charge and discharge current, and the like. As the thickness of the film is decreased, on the contrary, the recording voltage is reduced. However, the quality of the nitride film deteriorates, resulting in a decrease in the charge trapping density and a deterioration in the recording and erasing characteristics. If the film quality is improved by further changing the manufacturing conditions of the nitride film, it has been confirmed experimentally that it tends to be difficult to accumulate charges for realizing sufficient reproducing sensitivity due to decrease in the charge trapping density. As described in the foregoing, with the prior art information recording medium, it has not been possible to obtain results which are satisfactory in view of the overall characteristics of recording, reproducing, and erasing.

In contrast, to this, in the case of recording operation on the information recording medium embodying the present invention, as shown in Fig.1, upon application of a positive voltage to the electrode, electric currents J1,J2, and J3 flow in the oxide film 12, and the two layers 13a and 13b of the nitride film 13, respectively, as illustrated in Fig.2b. The difference between J1 and J2 is stored in the layer of first kind 13a of the nitride film 13 as an accumulated electric charge, and the difference between J2 and J3, too, is accumulated in the layer 13a as an accumulated electric charge.

In this way, in the information recording medium embodying the present invention, the nitride film 13 is constructed as a two-layer structure in which, through changes in the film manufacturing conditions, the first layer 13a is formed to possess such film properties as large electric current density and large charge trapping density, whereas the second kind layer 13b is formed to possess a good film quality of small electric current density and small charge trapping density. As a result of this construction, even within the nitride film 13 itself, there is a difference between the electric currents J2 and J3 in the layers 13a and 13b, respectively, not only the difference between the electric currents J1 and J2 which is accumulated in the nitride film as accumulated electric charges. This contributes to the accumulated electric charges, improving markedly the charge trapping efficiency of the present recording medium over the prior art recording medium. Accordingly,even with a smaller thickness of the nitride film (sum of the thicknesses of the layers 13a and 13b) compared with the thickness of the film according to the prior art, it becomes possible to store sufficient amount of accumulated electric charges. Moreover, both of the recording voltage and the erasing voltage can be made small so that there exists less chance of impairing the electrode due to charge and discharge current, discharges, and the like. This make it possible to extend the life of the electrode.

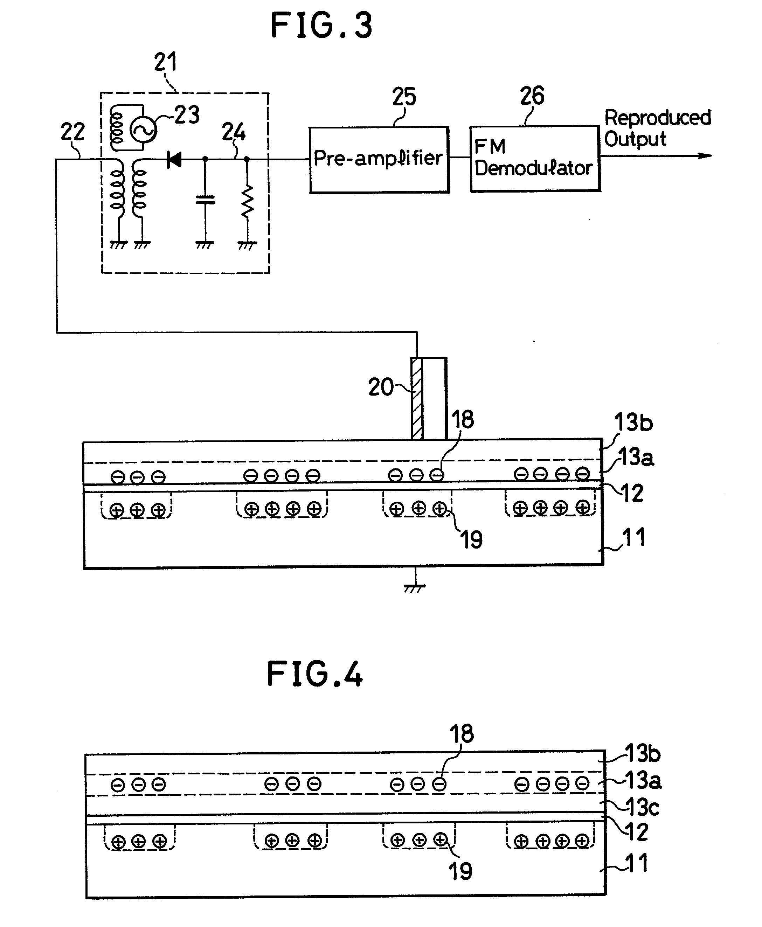

On the other hand, in reproducing the signal recorded as in the above, due to existence of a depletion layer 19 on the surface of the semiconductor base 11 directly beneath the accumulated electric charges 18 as shown in Fig. 3, the electrostatic capacity of the portion in the direction of the medium thickness becomes small, creating a difference in the electrostatic capacity between the portion where no electric charge is accumulated. Therefore, for reproducing the signal, it is only necessary to detect the variations in the electrostatic capacity with a reproducing electrode which is similar to the recording electrode. For example, as shown in Fig.3, a reproducing circuit 21 includes the portion of the recording medium that makes contact with the reproducing electrode 20 as a part of a resonance circuit 22. A high frequency signal 23 of the order of 900 MHz is applied to the resonance circuit 22 to take out the variations in the electrostatic capacity of the recording medium 11 in the form of an AM modulated wave by converting the variations into the variations in the resonance frequency of the resonance circuit 22. The signal of the AM modulated wave is envelope-detected by a detection circuit 24. After the detected output is amplified by a preamplifier 25 and demodulated with an FM demodulator 26, the original signal, for example, a video signal, is obtained as a reproduced output. In this manner, reproducing of the signal can be carried out with ease by a method similar to the prior art video disk player of the electrostatic capacity system.

Next, the erasing operation of the recorded signals will be illustrated by comparing it with the erasing operation for the prior art recording medium. For erasure, it is necessary to apply a voltage of opposite polarity to the voltage used for recording. However, in the case of prior art recording medium, it has been confirmed experimentally that it is necessary to make the nitride film sufficiently thick, as was mentioned earlier.This means that, the erasure quality of the nitride film has to be better, for which the nitride film has to be sufficiently thick.  However, thick nitride films lead to a drawback that the voltages for recording and erasing have to be large.  When the nitride film is thin, the erasure characteristics are less satisfactory compared with thick nitride film due to the poor quality of the nitride film.  On the other hand, attempts to improve the quality of the nitride film result in smaller trapping density for accumulation of the electric charges.  In contrast to this, in the case of the recroding medium according to the present invention, the nitride film 13 has a construction in which the second kind layer 13b with high film quality though with low charge trapping density, is overlapped on the first kind lyer 13a with high charge trapping density.  Therefore, the erasing voltage can be made low so that it is possible to realize a recording medium with satisfactory erasing efficiency, and moreover, with a charge trapping density which is comparable to the prior art recording medium.

Figure 4 illustrates another embodiment in accordance with the present invention. It has a construction in which , in between the first insulator film 12 and the first kind layer 13a of the second insulator film 13,there is inserted a further layer 13c of good film quality, similar to the second kind layer 13b above the layer 13a, with small electric current density and small charge trapping density.  The layer 13c acts to increase the charge accumulation efficiency by suppressing the so-called back tunneling phenomenon by which during recording a part of the electric charges that tunneled to the second insulator film 13 return to the semiconductor base 11 back again.  In contrast with the thickness of several hundered $\overset{\circ}{A}$ for the layers 13a and 13b, a thickness of as small as 50 $\overset{\circ}{A}$ will do for the film 13c.  When the back tunneling phenomenon is alleviated as  in the above, the charge accumulation efficiency can be improved without varying the erasing and reproducing characteristics.

It should be understood, of course, that the foregoing relates only to preferred embodiments of the present invention and that numerous modifications or alterations may be made therein without departing from the                  scope of the invention as set forth in the appended claims.

0143470

Claims:

1.   An information recording medium for recording an information signal by accumulating electric charges in accordance with the information signal, characterised by: a semiconductor base (11); a first insulator film (12) formed on said semiconductor base; and a second insulator film (13) formed on said first insulator film (12) for accumulating electric charges in response to the information signal, said second insulator film comprising a first layer (13a) with large charge trapping density and a second layer (13b) made of the same material as said first layer (13a) so as to have a charge trapping density smaller than that of said first layer (13a), and said second layer (13b) being placed on the opposite side of said first insulator film (12) relative to said first layer (13a).

2.   An information recording medium as claimed in claim 1 characterised in that said second layer (13b) of said second insulator film (13) has smaller electric current density than said first layer (13a).

3.   An information recording medium as claimed in claim 1 or 2 characterised in that said second insulator film (13) further comprises a layer (13c) placed inbetween said first insulator film (12) and said first layer (13a) with similar change trapping density as for said second layer (13b).

4.   An information recording medium as claimed in any one of the preceding claims characterised in that accumulation of electric charges on said second insulator film (13) is accomplished by applying a voltage corres-

0143470

ponding to the information signal to an electrode (15) provided on said second insulator film (13).

5. An information recording medium as claimed in claim 4 characterised in that upon application of a voltage on the electrode (15), there flow electric currents with different magnitudes in each of said first insulator film (12) and the first layer (13a) and the second layers (13b) of said second insulator film (13), and the difference between the electric currents in said first insulator film (12) and the first layer (13a) of said second insulator film (13), as well as the difference between the electric currents in the first layer (13a) and the second layer (13b) of said second insulator film (13), are accumulated in the first layer (13a) of said second insulator film (13) in the form of the electric charges.

6. An information recording medium as claimed in any one of claims 1 to 5 characterised in that said second insulator film (13) is a silicon nitride film.

7. An information recording medium as claimed in any one of claims 1 to 6 characterised in that said first insulator film (12) is a silicon oxide film.

8. An information recording medium as claimed in any one of claims 1 to 7 characterised in that said semiconductor base (11) comprises an N-type silicon crystal.

9. An information recording medium as claimed in any one of claims 1 to 7 characterised in that said semiconductor base (11) comprises a p-type silicon crystal.

10. An information recording medium as claimed in claim 6 characterised in that said second insulator film (13)

- 13 -

0143470

of a silicon nitride has been formed in a high temperature furnace by chemical reaction between ammonia and silane.

11. An information recording medium as claimed in claim 10 characterised in that said silicon nitride film (13) has been formed with differing mixing ratios of ammonia and silane.

0143470

# FIG.1

Information Signal

FM Modulator  16

Pulse Amplifier  17

15  14

13

18

13b
13a
12
19
11

10

# FIG.2a

+V

$Si_3$ $N_4$

$SiO_2$

Si

# FIG.2b

13b  15

$J_3$

13a  $J_2$

12  $J_1$

11

$J_2$

$J_1$

0143470

## FIG.3

Pre-amplifier

FM Demodulator

Reproduced Output

## FIG.4